# EUROPÄISCHE PATENTANMELDUNG

(11) **EP 0 796 892 A1**
(43) Veröffentlichungstag der Anmeldung: **24.09.1997**
(21) Anmeldenummer: 97104813.7
(22) Anmeldetag: 20.03.1997
(51) Int. Cl.: C08K 13/02

(54) **Flammhemmende, raucharme und thermostabile Polymerzusammensetzung**

(30) Priorität: 22.03.1996 DE 19611260; 28.01.1997 DE 19702993
(71) Anmelder: METALLGESELLSCHAFT AG, 60323 Frankfurt am Main (DE)
(72) Erfinder: Amirzadeh-Asl, Djamschid, Dr., 47445 Moers (DE); Uhlenbroich, Theodor, Dr., 47269 Duisburg (DE)

(57) **Zusammenfassung**

Die flammhemmende, raucharme und thermisch stabilisierte Polymerzusammensetzung besteht aus
a) 26 bis 96 Gew.-% eines Polymers
b) 0 bis 34 Gew.-% Glasfasern,
c) 2 bis 20 Gew.-% Melamin, eines Melaminharzes, einer Melamin-Verbindung oder deren Mischungen und
d) 2 bis 20 Gew.-% Zinksulfid.

## Beschreibung

Die Erfindung betrifft eine flammhemmende, raucharme und thermostabile Polymerzusammensetzung.

Die Entflammbarkeit von synthetischen organischen Polymeren kann vermindert werden, indem in die Polymerzusammensetzung Melamin oder eine Melamin-Verbindung eingearbeitet wird.

In der EP 0 055 893 A2, der EP 0 122 699 A2, der EP 0 139 893 A1 und der US 4 504 611 A sind Polymerzusammensetzungen beschrieben, die aus Polyamid, Glasfasern und Melamin oder einer Melamin-Verbindung bestehen. Zusätzlich enthalten diese Zusammensetzungen eine halogenierte organische Verbindung sowie Zinkoxid, Zinkborat oder Antimonoxid zur Verbesserung der flammhemmenden Eigenschaften.

Aus der EP 0 137 598 A2 ist ebenfalls eine flammhemmende Polyamid-Zusammensetzung bekannt geworden, die Melamin, dessen Salze oder eine Melamin-Verbindung und eine chlorierte organische Verbindung enthält. Zur Verbesserung der flammhemmenden Eigenschaften wird hier zusätzlich Eisenoxid und Zinnoxid verwendet.

In der DE 28 02 047 C2 ist eine flammhemmende und raucharme Polymerzusammensetzung beschrieben, die aus einem halogenhaltigen Polymer oder einem halogenfreien Polymer und einer halogenhaltigen organischen Verbindung besteht und worin als Mittel zur Flammhemmung und Rauchunterdrückung Zinksulfid eingesetzt wird.

In der DE 10 68 007 C wurde vorgeschlagen, lineare Polyolefine dadurch zu stabilisieren, daß man ihnen Zinksulfid oder andere Sulfide der Gruppe IIB, IVB, VB und VIA des periodischen Systems der Elemente im Gemisch mit anderen an sich bekannten organischen Stabilisierungsmitteln zusetzt.

In der DE 22 26 932 B2 sind pigmentierte glasfaserverstärkte thermoplastische Formmassen offenbart, die anorganische Pigmente mit einer Moos-Härte kleiner 5, vorzugsweise kleiner 4, enthalten, wobei als anorganisches Pigment Zinksulfid verwendet wird.

In der US 4 111 905 A ist eine flammhemmende halogenenthaltende Polymerzusammensetzung bekannt geworden, die Zinksulfid sowie eine Komponente, ausgewählt aus einer Gruppe, bestehend aus Magnesiumhydroxid, Kalziumhydroxid, Bariumsulfat und hydratisiertem Aluminiumoxid, enthält.

In der EP 0 409 195 A2 ist eine Polycarbonat-Zusammensetzung bekannt geworden, welche durch einen Schmelz-Index (MFI) von 5 bis 50 g/10 min gekennzeichnet ist und welche 30 bis 65 Gew.-% eines thermoplastischen aromatischen Polycarbonats, 70 bis 35 Gew.-% Glasfasern mit einem Durchmesser von 3 bis 15 µm und 0,01 bis 15 Gew.-% einer Komponente, ausgewählt aus einer Gruppe, bestehend aus einem bromierten Polystyrol mit einer Partikelgröße von 0,1 bis 50 µm, Zinksulfid mit einer Partikelgröße von 0,1 bis 50 µm und einem Melamin-Cyansäure-Addukt mit einer Partikelgröße von 0,1 bis 50 µm, enthält. Durch die Zugabe von einem bromierten Polystyrol, Zinksulfid oder einem Melamin-Cyansäure-Addukt sollen vor allem hervorragende mechanische Eigenschaften und eine geringe Anisotropie und eine hohe Stabilität der Dimensionen der daraus hergestellten Formkörper gegenüber der Umgebungstemperatur erzielt werden, die typisch für elektrotechnische Präzisionsteile erforderlich sind. Zusätzlich sollen diese Komponenten eine Verbesserung der Gießfähigkeit der Polymerzusammensetzung bewirken. Über die Eigenschaften dieser Zusammensetzung in Bezug auf Entflammbarkeit und Rauchentwicklung ist in diesem Dokument nichts ausgesagt.

Es ist die Aufgabe der vorliegenden Erfindung, eine Polymerzusammensetzung zu schaffen, die flammhemmend, raucharm und thermostabil ist und keine Halogen-Verbindungen oder Antimonoxid enthält und deren Herstellung einfach und auf wirtschaftliche und umweltverträgliche Weise erfolgen kann.

Es wurde überraschend gefunden, daß diese Aufgabe durch eine Polymerzusammensetzung gelöst wird, die erfindungsgemäß aus
a) 26 bis 96 Gew.-% eines Polymers,
b) 0 bis 34 Gew.-% Glasfasern,
c) 2 bis 20 Gew.-% Melamin, eines Melaminharzes, einer Melamin-Verbindung oder deren Mischungen
d) 2 bis 20 Gew.-% Zinksulfid
besteht.

Unter dem Begriff "Polymer" im Sinne der Erfindung sind alle Plastomere, Duromere, Elastomere und Thermoelastomere zu verstehen, die aufgrund ihrer chemischen Eigenschaften für eine Zugabe von Melamin, eines Melaminharzes, einer Melamin-Verbindung oder deren Mischungen und Zinksulfid geeignet sind. Gegebenenfalls kann die Polymerzusammensetzung zusätzlich Verarbeitungshilfsmittel, Stabilisatoren, Weichmacher, organische Pigmente und Farbstoffe enthalten. Für die Herstellung der erfindungsgemäßen Polymerzusammensetzung sind alle für die Herstellung von Polymeren und glasfaserverstärkten Polymeren geeigneten Verfahren verwendbar. Spezifische Methoden zur Herstellung der Polymerzusammensetzungen sind in der Literatur in ausreichendem Maße beschrieben.

Überraschenderweise wurde gefunden, daß durch die erfindungsgemäße Kombination von dem als Flammhemmungsmittel bekannten Melamin, Melaminharz, Melamin-Verbindung oder deren Mischungen und Zinksulfid auf synergetische Weise die Flammhemmung und Rauchunterdrückung sowie die Thermostabilität gegenüber einem alleinigen Einsatz von Melamin, eines Melaminharzes, einer Melamin-Verbindung oder deren Mischungen signifikant verbessert wird. Darüber hinaus besitzt die Verwendung von Zinksulfid wirtschaftliche und verfahrenstechnische Vorteile, denn Zinksulfid ist -insbesondere im Gegensatz zu bromierten, organischen Verbindungen und Antimonoxid- eine relativ kostengünstige und umweltverträgliche Verbindung.

Gemäß einer bevorzugten Ausgestaltung der Erfindung besteht die Polymerzusammensetzung aus
a) 46 bis 96 Gew.-% eines Polymers,
b) 0 bis 34 Gew.-% Glasfasern,
c) 2 bis 10 Gew.-% Melamin, eines Melaminharzes, einer Melamin-Verbindung oder deren Mischungen
d) 2 bis 10 Gew.-% Zinksulfid.

Mit dieser Zusammensetzung wird eine besonders gute Flammhemmumg und Rauchunterdrückung sowie thermische Stabilität erzielt.

Gemäß einer weiteren Ausgestaltung der Erfindung ist das Polymer ein thermoplastisches Polymer. Der Begriff "thermoplastisches Polymer" im Sinne der Erfindung umfaßt alle unter Einwirkung von Wärme verarbeitbaren Polymere, wie z.B. Polyamide, Polyester, Styrolpolymerisate, Polyoxymethylen, Polyolefine, Polycarbonate Polyvinylchloride, Polyalkylen-Terephtalat, Polyurethane und Polyvinylacetate sowie deren Copolymeren und Polymermischungen.

Gemäß einer weiteren Ausgestaltung der Erfindung ist das thermoplastische Polymer ein Polyamid, Polyester, Styrolpolymerisat, Polyoxymethylen, Polyolefin, Polyvinylchlorid, ein Copolymer oder eine Mischung aus diesen Polymeren. In Polymerzusammensetzungen mit diesen Polymeren hat sich die erfindungsgemäße Zugabe von Melamin oder einer Melamin-Verbindung zur Flammhemmung, Rauchverminderung und Thermostabilität als besonders wirkungsvoll erwiesen. Die hochtemperaturbeständigen Thermoplaste Polycarbonat und Polyalkylen-Terephtalat haben sich nicht als besonders bevorzugt erwiesen. Für diese Polymere kommen als Verbindungen zur Flammhemmung vorzugsweise Verbindungen mit aromatisch gebundenem Brom, wie beispielsweise Tetrabrombisphenol A und Tetrabromphthalsäureanhydrid in Frage, denen zur Erhöhung ihrer Wirksamkeit Antimontrioxid als Synergist zugegeben werden kann.

Gemäß einer weiteren Ausgestaltung der Erfindung ist das thermoplastische Polymer ein Polyamid. Unter dem Begriff "Polyamid" sind hier alle Verbindungen zu verstehen, die durch die Gegenwart von Amid-Gruppen als Bestandteile der Polymerkette charakterisiert sind. Die Gruppe der Polyamide umfaßt dabei alle verschiedenen Homopolymeren, Copolymeren und deren Mischungen. Typische Polyamide sind beispielsweise Polyamid 6, Polyamid 11, Polyamid 12, Polyamid 66, Polyamid 610 und Polyamid 612.

Gemäß einer weiteren Ausgestaltung der Erfindung beträgt das Gewichtsverhältnis von Melamin, einem Melaminharz, einer Melamin-Verbindung oder deren Mischungen zu Zinksulfid ca. 1:2 bis 2:1.

Gemäß einer weiteren Ausgestaltung der Erfindung beträgt das Gewichtsverhältnis von Melamin, einem Melaminharz, einer Melamin-Verbindung oder deren Mischungen zu Zinksulfid ca. 1:1. Ein Verhältnis von ca. 1:1 bedeutet, daß geringe Abweichungen von diesem Verhältnis , wie sie bei der technischen Herstellung der Polymerzusammensetzung auftreten können, mitumfaßt sind. Daß bedeutet, das Verhältnis kann beispielsweise in einem Bereich von 0,95:1 bis 1:0,95 liegen. Bei diesem Verhältnis wird eine relativ hohe Flammhemmumg und Rauchunterdrückung sowie eine verbesserte Thermostabilität erzielt. Ein Gewichtsverhältnis von ca. 1:1 hat sich als besonders wirkungsvoll bei einem Einsatz von Polyamid in der Polymerzusammensetzung gezeigt, um die Flammschutzeigenschaften und Thermostabilität der Zusammensetzung zu verbessern.

Gemäß einer weiteren Ausgestaltung der Erfindung haben die Partikel des Melamin, eines Melaminharzes, einer Melamin-Verbindung oder deren Mischungen einen Durchmesser von 0,5 bis 20 µm und die Zinksulfid-Partikel einen Durchmesser von 0,1 bis 20 µm. Dadurch wird eine relativ gute Verarbeitbarkeit der Polymerzusammensetzung gewährleistet.

Gemäß einer weiteren Ausgestaltung der Erfindung haben die Glasfasern eine durchschnittliche Länge von 50 bis 2000 µm und einen durchschnittlichen Durchmesser von 2 bis 15 µm. Diese Dimensionierung der Glasfasern führt zu relativ guten mechanischem Eigenschaften der aus der Polymerzusammensetzung hergestellten Formkörper, wobei gleichzeitig eine relativ gute Verarbeitbarkeit der Polymermasse gewährleistet ist.

Gemäß einer weiteren Ausgestaltung der Erfindung wird als Melamin-Verbindung Melamin-Cyanurat verwendet. Die Verwendung von Melamin-Cyanurat führt zu einer besonders wirksamen Flammhemmung und Rauchunterdrückung.

Gemäß einer weiteren Ausgestaltung der Erfindung werden die Glasfasern oder ein Teil der Glasfasern durch mineralische Füllstoffe oder Glaskugeln ersetzt. Als mineralische Füllstoffe können beispielsweise Kreide, Glimmer, Talkum oder Bariumsulfat eingesetzt werden.

Gemäß der Erfindung kann die Polymerzusammensetzung auch frei von Glasfasern sein. Durch das Weglassen der Glasfasern in der Polymerzusammensetzung wird dessen Verarbeitbarkeit verbessert.

Derartige Polymerzusammensetzungen können dort vorzugsweise ihre Anwendung finden, wo an die mechanischen Eigenschaften der daraus hergestellten Formkörper nur relativ geringe Anforderungen gestellt werden.

Die Erfindung wird nun anhand eines Beispiels näher erläutert.

### Beispiel:

### Versuch a):

Es wurden 95 Gew.-% Polyamid 6 mit 2,5 Gew.-% Melamin-Cyanurat sowie 2,5 Gew.-% Zinksulfid mit einer mittleren Teilchengröße von 0,3 µm in einem Chargenmischer (Henschel-Mischer) für 5 Minuten intensiv gemischt. Die homogenisierte Mischung wurde anschließend über einen Doppelschnecken-Extruder (Leistritz-Doppelschnecken-Extruder) bei einer Temperatur von 230 bis 260°C extrudiert. Anschließend wurde das Extrudat in einer Spritzgußmaschine bei einer Temperatur von 280°C zu Normprüfstäben verarbeitet.

### Versuch b):

Der Versuch a) wurde wiederholt, wobei jedoch statt Zinksulfid ausschließlich Melamin-Cyanurat in einer Gesamtmenge von 5 Gew.-% verwendet wurde.

### Versuch c):

Polyamid 6 wurde ohne Zugabe der zuvor genannten Komponenten gemäß Versuch a) zu Normprüfstäben verarbeitet.

An den so hergestellten Prüfstäben aus den Versuchen a), b) und c) wurde die Flammverzögerung unter Verwendung des Limiting-Oxygen-Index (LOI) nach DIN 22117E und die Thermostabilität bestimmt. Zur Messung der Thermostabilität wurden die Formkörper bei 120°C im Umluftofen gelagert und nach 30 sowie 65 Stunden auf ihre optischen Eigenschaften (Helligkeit), gemessen über schwarz, geprüft. Die Meßwerte sind in der Tabelle angeführt.

| Versuch | LOI (% O₂) | Helligkeit | Helligkeit nach 30 h | Helligkeit nach 65 h |
|---|---|---|---|---|
| a | 28,5 | 90,6 | 84,8 | 81,5 |
| b | 27 | 84,9 | 77,2 | 74,5 |
| c | 24 | 71,2 | 68,6 | 65,7 |

Überraschenderweise zeigen die gemessenen Werte des Limiting Oxygen-Index (LOI) bei der Kombination von Zinksulfid und Melamin-Cyanurat eine Verbesserung der Flammschutzeigenschaften und darüber hinaus deutlich verbesserte optische Daten (Helligkeit) gegenüber dem alleinigen Einsatz von Melamin-Cyanurat. Auch bei zeitabhängiger thermischer Belastung bleiben die optischen Daten bei der erfindungsgemäßen Kombination von Zinksulfid und Melamin-Cyanurat in der Polymerzusammensetzung auf deutlich höherem Niveau.

## Patentansprüche

1. Flammhemmende und raucharme Polymerzusammensetzung, bestehend aus
a) 26 bis 96 Gew.-% eines Polymers,
b) 0 bis 34 Gew.-% Glasfasern,
c) 2 bis 20 Gew.-% Melamin, eines Melaminharzes, einer Melamin-Verbindung oder deren Mischungen und
d) 2 bis 20 Gew.-% Zinksulfid.

2. Polymerzusammensetzung gemäß Anspruch 1, bestehend aus
a) 46 bis 96 Gew.-% eines Polymers,
c) 0 bis 34 Gew.-% Glasfasern,
c) 2 bis 10 Gew.-% Melamin, eines Melaminharzes, einer Melamin-Verbindung oder deren Mischungen und
d) 2 bis 10 Gew.-% Zinksulfid.

3. Polymerzusammensetzung nach Anspruch 1 oder 2, bei der das Polymer ein thermoplastisches Polymer ist.

4. Polymerzusammensetzung nach Anspruch 3, bei der das thermoplastische Polymer ein Polyamid, Polyester, Styrolpolymerisat, Polyoxymethylen, Polyolefin, Polyvinylchlorid, ein Copolymer oder eine Mischung aus diesen Polymeren ist.

5. Polymerzusammensetzung nach Anspruch 4, bei der das thermoplastische Polymer ein Polyamid ist.

6. Polymerzusammensetzung nach einem der Ansprüche 1 bis 5, bei der das Gewichtsverhältnis von Melamin, einem Melaminharz, einer Melamin-Verbindung oder deren Mischungen zu Zinksulfid 1:2 bis 2:1 beträgt.

7. Polymerzusammensetzung nach Anspruch 6, bei der das Gewichtsverhältnis von Melamin, einem Melaminharz, einer Melamin-Verbindung oder deren Mischungen zu Zinksulfid ca. 1:1 beträgt.

8. Polymerzusammensetzung nach einem der Ansprüche 1 bis 7, bei der die Partikel von Melamin, einem Melaminharz, einer Melamin-Verbindung oder deren Mischungen einen mittleren Durchmesser von 0,5 bis 20 µm und die Zinksulfid-Partikel einen mittleren Durchmesser von 0,1 bis 20 µm aufweisen.

9. Polymerzusammensetzung nach einem der Ansprüche 1 bis 8, bei der die Glasfasern eine durchschnittliche Länge von 50 bis 2000 µm und einen durchschnittlichen Durchmesser von 2 bis 15 µm aufweisen.

10. Polymerzusammensetzung nach einem der Ansprüche 1 bis 9, bei der als Melamin-Verbindung Melamin-Cyanurat verwendet wird.

11. Polymerzusammensetzung nach einem der Ansprüche 1 bis 10, bei der die Glasfasern oder ein Teil der Glasfasern durch mineralische Füllstoffe oder Glaskugeln ersetzt werden.
